Europäisches Patentamt

European Patent Office

Office européen des brevets

(19)

(11) Publication number: **0 365 054**
**A2**

# EUROPEAN PATENT APPLICATION

(21) Application number: 89123133.4

(51) Int. Cl.5: **B29C 53/04**

(22) Date of filing: 24.10.85

(30) Priority: 04.01.85 US 688649

(43) Date of publication of application:
25.04.90 Bulletin 90/17

(60) Publication number of the earlier application in
accordance with Art.76 EPC: 0 208 698

(84) Designated Contracting States:
AT BE CH DE FR GB IT LI LU NL SE

(71) Applicant: ANECHOIC SYSTEMS, INC.
387 University Avenue
Westwood, MA 02090(US)

(72) Inventor: Swartz, Henry
67 Mayflower Drive
Chestnut Hill, Massachusetts 02167(US)

(74) Representative: Ackroyd, Robert et al
POLLAK MERCER & TENCH High Holborn
House 52-54 High Holborn
London WC1V 6RY(GB)

(54) Apparatus and method for bending a plastics sheet.

(57) The invention provides for an apparatus and method for bending a plastics sheet, wherein a band (47) of one side of the sheet (44) is heated by a first heating means (46R-1), a band (45) of the other side of the sheet (44) is heated by a second heating means (46R-2), which second heating means (46R-2) is focussed to form a heated band narrower than that formed by the first heating means. The first and second heating means are disposed on substantially the same plane.

FIG.3b

EP 0 365 054 A2

## APPARATUS AND METHOD FOR BENDING A PLASTICS SHEET

The present invention relates to bending of a plastics material, and in particular to bending of a plastics sheet material.

Such sheets are useful in constructing enclosures and for other purposes including fixed room-walls, free standing divider walls and the construction of such panels and sheet materials.

When used in constructing enclosures or the like, the plastic sheets are formed into the required shape by a bending process. Such sheets commonly have thicknesses of around 3/16 inch (0.476cm) and typically 1/2 (1.27cm) to 1 inch (2.54cm) of plastics sheet has to be bent as required. Such sheets have previously been bent to fabricate various shapes and designs. Such bending, however, has frequently distorted the plastic at the bend and placed unusual stresses upon it (in contrast to the trouble-free regimen of bending 1/8 inch thick sheet). Bending plastic into decorative shapes requires utmost consideration for the appearance of the product and, in many cases, any distortions or thinning at the bend tends to reduce its attractiveness and its strength.

Most bending processes of the prior art merely heated the plastic sheet on one or both sides until it became sufficiently softened or plasticised to make the bend. The sheet was then bent to the desired angle and allowed to harden. While such processes usually provided adequate bends from a mechanical point of view, the plastic was thinner at the bend than on the other side, and this is unattractive. Further bending times of the state of the art are very slow (e.g. 1-2 hours for one inch thick acrylic sheets and 20-30 minutes for half inch thick). Also, stresses may be introduced into the sheet which may weaken it structurally and make it less pleasing aesthetically. Frequently, such stresses can be seen as opalescence when the bent sheet is viewed in certain lighting angles. The present invention affords a resolution of such problems.

In the US patent to Parmann, US Patent 4 097 573, a method of bending pipes is discussed in which a pipe is subjected to direct heat on the desired outer radius and cycled heat on the inner radius. While such direct and indirect heating may be suitable for pipe, effective bends cannot be made with flat sheets unless sources of heat are applied to both sides.

US Patent 3 767 752 to Karlyn, disclosed a method of forming a map holder hinge from very thin plastic sheets. The sheet is heated with heat lamps that are disposed to both sides of the sheet. While there is some attempt to concentrate the heat, there is no attempt to provide a focussed heat band on one side of the sheet and a wide heat band on the obverse side.

According to one aspect of the present invention there is provided a method of bending thick sheets, 3/16 inch and larger, of plastic materials with resultant bends which are substantially stress free and of substantially the same structural and visual properties as adjacent unbent portions comprising the steps of:

(a) arranging such sheet substantially horizontally;

(b) heating a relatively wide region along the sheet bottom with heat application which effects a non-linear gradient spreading of the heat externally applied or internally generated therein to soften 40-60% of the sheet thickness upwards of said bottom surface to plasticity;

(c) the heating an overlying top surface region of the sheet with intense heat limited to a narrower zone aligned with a critical part of the lower heated zone while maintaining the lower heat until the upper heated zone melts in part;

(d) then bending the sheet.

According to another aspect of the present invention there is provided apparatus for bending a sheet of plastic, said apparatus comprising;

(a) means for receiving a sheet of plastics;

(b) first heating means for heating a band on one side of said sheet;

(c) second heating means for heating a band on the obverse side of said sheet;

(d) means disposed behind said second heating means and arranged to focus said second heating means such that the band of heat it radiates upon said plastics sheet is narrower than the band radiated by said first heating means;

(e) said first and said second heating means being disposed on substantially the same plane and at an angle to the plane of said receiving means.

According to a further aspect of the present invention there is provided a method of heating thick sheets of plastic, the steps of which comprise:

(a) arranging a sheet of plastic between a pair of longitudinally extending heat sources;

(b) heating a wide band on one side of said sheet with a first heat source and then heating the obverse side of said sheet with a second heat source, the heat from said second heat source being focussed such that it heats a narrower band of plastic than heated by said first heat source;

(c) bending said sheet about an axis of rotation centered on said obverse side of said sheet so as to form the inner radius of the bend.

Thick sheets of longitudinally extending, generally flat, rigid thermoplastic material, generally over one-eighth inch in thickness, can be bent without introducing stresses or thinning when using the process and equipment of the present invention at substantially faster speeds. The sheet must be heated on both sides - on a bottom and a top, the heaters being arranged so that two surface regions of softened plastic are formed on opposite sides of the sheet. One of the regions (on the bottom surface) is relatively wide and to form this region, sufficient low-intensity heat - below the melting point of the plastic used, but in its softening range - is applied so that at least between about 40-60% of the thickness of the sheet is plasticised. The width of the region is defined by the width of the softened portion of the sheet. The other region (on the top) is above the melting point of the plastic (thereby limiting allowable exposure time of the upper heat application) and is relatively narrow, or at least narrower than the wide region on the bottom and of a predetermined width. It is formed by focussing heat on the obverse side of the sheet during the time that it is being heated by the source which forms the wide band. It is important to note that the focussed heat should irradiate the centre of the wider region. In this way, the focussed heater quickly softens the balance of the thickness of the sheet so that it can be bent without including stresses or thinning the plastic.

Because the high intensity, focussed heater will raise the temperature of the sheet quite quickly, to achieve the desired bend according to the invention, initiation of the higher intensity focussed heat must be delayed at least until a substantial portion of the sheet is initially plasticised by the wide heat source so as to prevent deterioration of the plastic due to prolonged heating at elevated temperatures.

A fuller understanding of the nature and objects of the present invention will become apparent upon consideration of the following detailed description taken in conjunction with the accompanying figures of drawing, wherein:

Fig. 1 is a perspective view of an acoustic enclosure embodying the present invention;

Fig.2 is a rear view of the acoustic enclosure of Fig. 1;

Fig. 3A is a cross-sectional view of a sheet of thermoplastic material suitable for use in the present bending process and with the herein disclosed bending apparatus;

Fig. 3B is a partial cross-sectional view illustrating the application of heat to a plastic sheet in accordance with the present invention;

Figs. 4A and 4B are cross-sectional views illustrating a bent section of plastic sheet. Fig. 4A is illustrative of a type of deformity resulting from heating processes of the prior art. Fig. 4B illustrates, in a 90 degree bend, the shape of the corner when the sheet is bent according to the present process.

Figs. 5A and 5B illustrate a 180 degree bend in a plastic sheet. In Fig. 5A (the prior art), the sheet is stressed and thinned out at the corner whereas no such thinning occurs in the sheet bent by the present process, and illustrated in Fig. 5B.

Fig. 6 is a schematic, perspective view, of one embodiment of apparatus suitable for bending the plastic sheets according to the present invention.

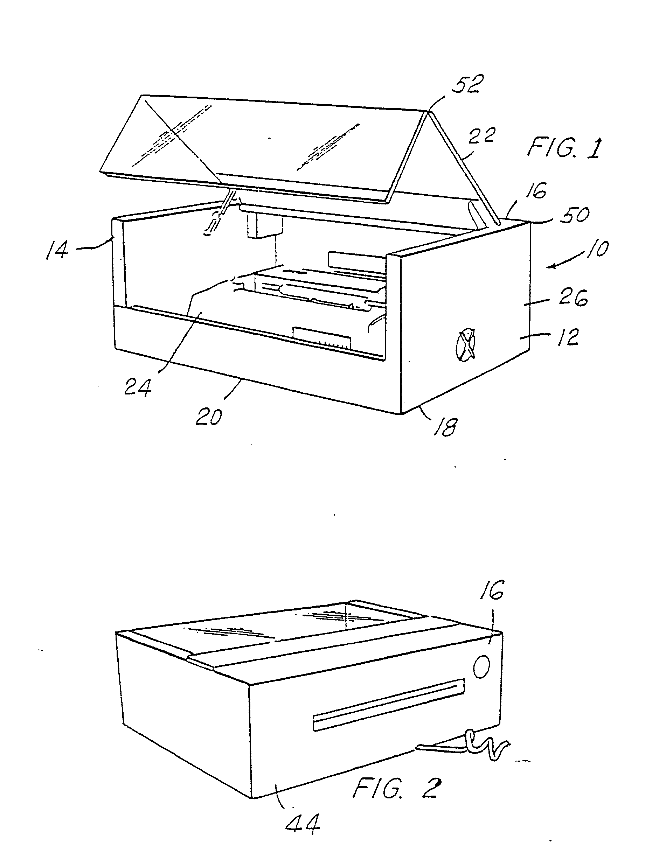

Referring now to the drawings, particularly Figs. 1 and 2, there is shown an acoustic enclosure 10 embodying the present invention. Enclosure 10 includes side panels 12, 14, a rear panel 16, a bottom panel 18, a front panel 20, and a cover 22. A noise generating device 24, for example a computer printer, is mounted within enclosure 10.

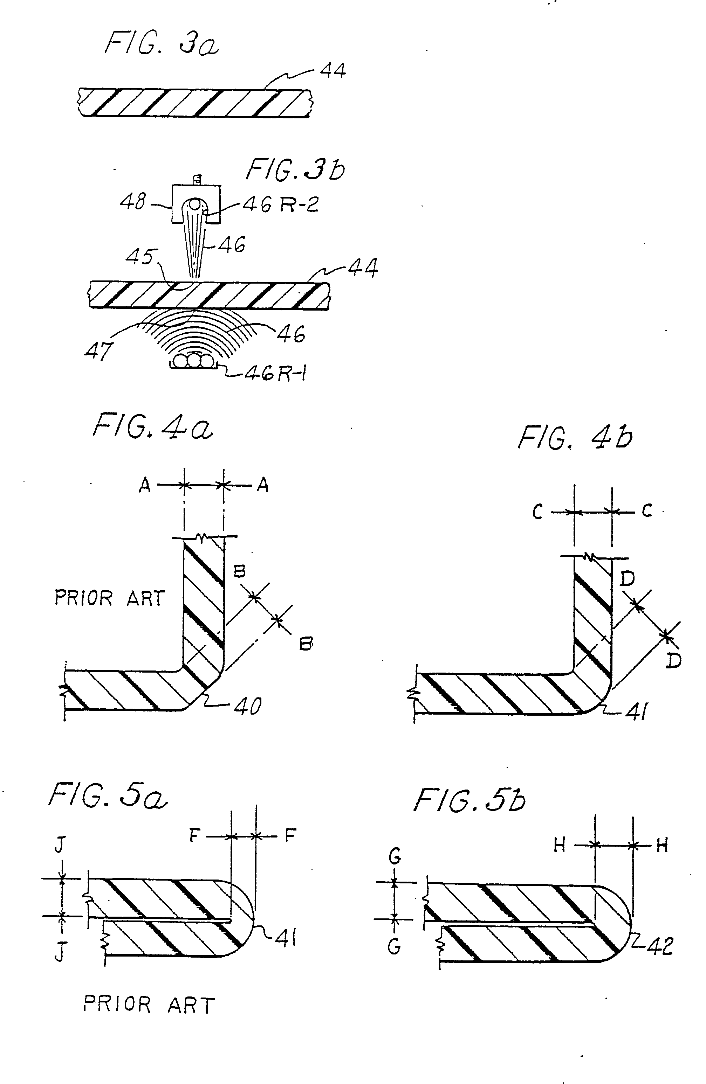

Front panel 20 is similar in construction to side panels 12 and 14. Cover 22 comprises in essence extensions of the top and front panels and is made, for example, of an optically clear rigid thermoplastic sheet, preferably composed of an acrylic or polycarbonate for example. It has one or more bends (just one shown in Fig. 1) and is hinged to a top shelf 50 which is attached to the rear of enclosure 10. Top shelf 50 is similar in construction to front panel 20. Cover 22 is provided with a bend 52 which is formed in a novel manner according to the steps shown in connection with the description (below) of Figs. 4A-6. Portions of the sheet which are not used for viewing (e.g. because they are covered with opaque reinforcing strips anyway) may be covered with acoustic foam on the inner face. The sheet may be of multi-piece construction instead of the one piece form shown to provide windows where needed with limited sacrifice of acoustic insulating benefits since major components of air-borne noise are suppressed by the side, bottom, rear, front and top laminate construction of the panels there.

In order to maximize the sound absorbing characteristics of enclosure 10, selected thickness of the open celled acoustic material, for example polyurethane foam, or other foam, or lofted fiber mats, are provided on inner strata 30 of side sheets 12 and 14, front panel 20 and shelf 50, on inner stratum 44 of rear panel 16, and on outer stratum 48 of bottom sheet 18, to minimize noise and vibration generated by computer printer 24. This is, the noise generated by computer printer 24 which is positioned within enclosure 10 and the enclosure is tuned for minimum noise generation by placing various thicknesses of the polyurethane foam at selected places including (i) at paper feed openings, (ii) on cover portions, as noted above and (iii) over re-entrant fixtures (e.g. switches, fan openings and the like). Sound measurements are taken at various locations about the enclosure 10 and additional thicknesses of polyurethane foam are added until the measured noise level is below acceptable levels, for example 60db. After this initial tuning of enclosure 10, complete sheets of polyurethane foam corresponding to the maximum thickness of the polyurethane foam positioned during the tuning process is then affixed to the side panels 12, 14, rear panel 16, bottom panel 18, front panel 20 and top shelf 50. The thicknesses of the intermediate strata 28 and 46 is in the range of 2mm to 40mm. As noted in Figs. 1 and 2, enclosure 10 is provided with openings for air circulations, power cords, paper feed slots and the like.

There have been described so far panels including a multi-channel intermediate stratum and an enclosure made from such sheets and supplemental transparent sheet extensions thereof with a clear bend. The panels and such sheet extensions are usable in other applications taking advantage of thermal insulation, as well as sound insulation, lightness, internal geometry and strength properties thereof.

Rigid or semi-rigid plastic sheets, e.g. for use as part 22 of Fig. 1 above, of any width and length can be bent according to the present invention limited principally by the size of the heating and bending apparatus. A process and equipment therefore are now described in reference to Figs. 3A-6, and are most advantageously used with sheets greater than about one-eighth inch thick. With sheets less than one-eight inch they heat so quickly that the plastic softens too rapidly to provide any significant advantages through the use of the invention. Plastics which can bend according to such process include, among others, polystyrene, acrylics, high-density polyethylene, rigid polypropylene and polycarbonates. Individual softening temperatures of each of these materials are well known to the art and the length of time necessary to achieve softening will vary depending upon the thickness of the sheet. For example, acrylic resins soften when the sheet reaches about 350 degrees F and polycarbonate resins soften when they reach a temperature of about 340 to 400 degrees F. Care however, must be used with polycarbonates because they must be dried at elevated temperatures for quite a while before bending.

As shown in Figs 3A and 3B, a sheet 44 of plastic, preferably one of the compositions mentioned above, is disposed upon a table or platform (not shown) and arranged so that it can be subjected to radiant heat approximately on a line where the bend will be made. As shown in Fig. 3B, radiant heat 46 is applied by a heater 46R-1 in a band to a wide area 47 of one surface of sheet 44 and by heater 46R-2 in a band to a wide area 47 of one surface of sheet 44 and by heater 46R-2 to focussed band 55 on the obverse side. The heat source used to produce the upper band of focussed heat 46 is preferably a high intensity, commercially available quartz infra-red lamp and a resistance strip is used for the other heater 46R-1. The heat paths are disposed in planes which are generally normal to the plane of the sheet 44.

Heat source 46R-2 which is per se of a standard, commercially available construction, comprises a parabolic reflector 61 which concentrates the infra-red light emitted from its internal lamp and focusses it upon the plastic sheet 44 so as to concentrate the heat in a band 45 which is narrower than the wide band 47.

The width of the focussed band should be generally less than about twice the thickness of the sheet 44 and the width of the broad band should be greater than about four times the thickness of the sheet. The width of the wide band can be adjusted by a shutter disposed within a table or platform which is used to support the sheet or by varying the distance between the sheet or by shuttling the heater back and forth on a plane parallel to the plane of the sheet.

Changing the width of the focussed band is accomplished by moving heater 46R-2 on a plane normal to the plane upon which the sheet rests. In this way (within the focal limits of the heater) as the heater is moved nearer or further from the sheet, the width of the focussed band can be modified to accommodate various thicknesses of sheets.

According to this process, the sheet is continuously heated on its bottom side in a wide band until between about 40 and 60% of its thickness is softened. The heat spreads upward from the lower surface and reduces in intensity (i.e. a non-linear decline of temperature) going out the width of the band from its centred position. As the wide band is softening, lamp 46R-2 is turned on to form the narrower, top side, focussed band so that the balance of the sheet is softened or plasticised. Lamp 46R-2 provides essentially instantaneous (1-5 seconds, preferably 1-3) heat rise to a temperature above the melting point of the sheet. Generally, the programmed delay is such that the focussed heat is on for 25 to 50% of the time that heat source 46R-1 is on with (usually) a delay of between about 30 to 90 seconds between the start of the first heat source and the start of the second to form the focussed heat band. The difference in delay time depends upon the thickness of the sheet. A 30 second delay is generally used with one-eighth inch thick sheets and a 90 second delay can be used with one-half inch thick sheets. The total process time involved here for heating is less than three minutes for acrylic sheet (compared to 20-30 minutes for half inch in prior art processes). For one inch thick sheets, the prior art involves 1-2 hours; in the present invention an overall heat time of 30 minutes on the bottom is involved, the last 10-15 minutes of which involves top (high intensity, focussed) heating as well.

Subsequent to heating the entire thickness of the sheet 54, the sheet is indexed to a location in a bending brake (not shown) where it can be bent to the desired angle. Preferably the bending brake is in the form of a floating platen in which the space between the underlying table and the brake is adjusted to that the plastic can easily slip beneath it.

The softened plastic is then arranged until the desired bend line for the sheet is exactly beneath the bending brake. The break bar is then rotated to the desired bend angle so as to bend the sheet. The bent sheet is then held in this position until the plastic rehardens.

Turning to Figs. 4A and 4B, two sheets of one-half inch plastic having right angle bends are shown. In the embodiment of the prior art, a prior art bend is shown. Dimension A-A of one-half inch is reduced by 20 to 40% at the bend 40, as indicated by dimension B-B. As can be readily understood, a thinned bend can be less pleasing aesthetically and also mechanically weaker because of strains that reintroduced into the sheet during the bending process. In the embodiment shown in Fig. 4B, and fabricated according to the present invention, no significant thinning occurs at the bend 41. Dimension C-C is substantially the same as dimension D-D and aesthetically, the sheet shows no significant distortions from thinning nor are stresses introduced from the bending process.

Similarly with Figs. 5A and 5B, in which 180 degree bends are shown, even in this extreme case and when using the principles of the present invention, dimension H-H at the bend is substantially the same as dimension G-G of the sheet. This substantial identity in the sheet thickness at its flat surface and at its bend 42 is too contrasted to the sheet that was bent according to the prior art and shown in Fig. 3B. In that latter case, the sheet is 25 to 50% thinner at the bend 41 (dimension F-F) than on its flat surface (dimension J-J).

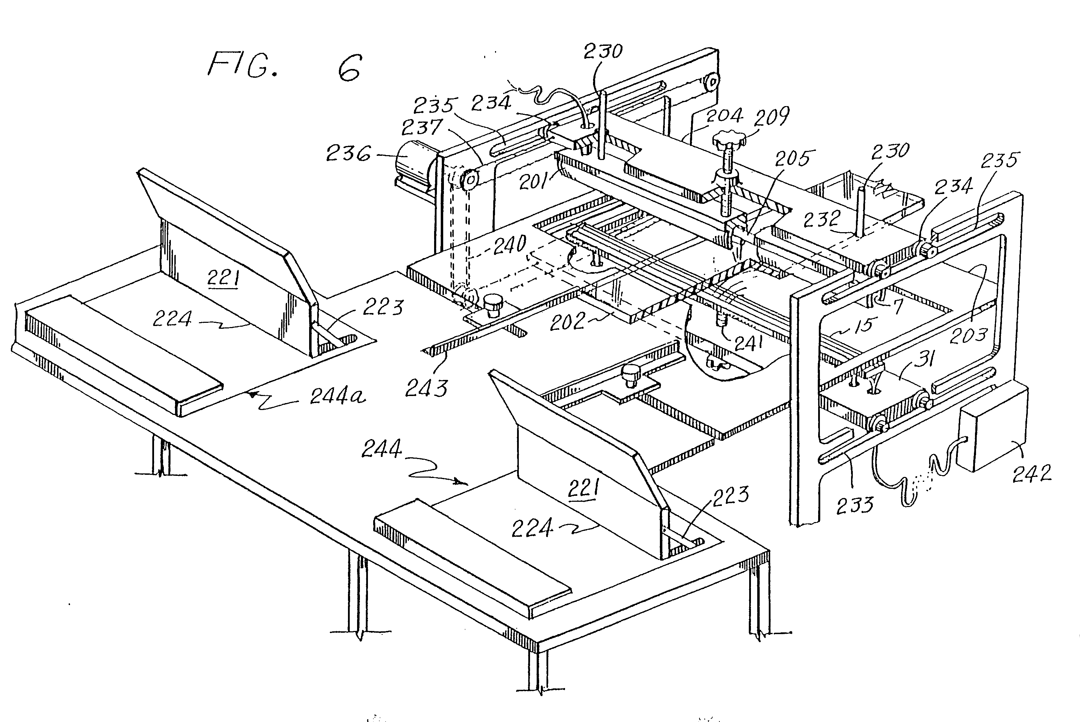

Fig. 6, as illustrative is shown of an apparatus suitable for bending the sheets according to the present invention. A fixture 201 is disposed over a table 203. A longitudinally extending quartz incandescent lamp 205 is disposed within a reflector of that is arranged to reflect a focussed conical beam of infra-red light upon a sheet 202 of plastic. The preferred focal point is selected within a range of depth below the upper surface of the plastic sheet to establish a narrow band of uniformly heated and softened plastic of the desired width (about twice the thickness of the sheet) on the upper surface.

Meanwhile the lower band is non-uniformly heated to twice such width. Fixture 201 is adjustable on a plane normal to the plane of table 203 by turning a handle and screw 209 disposed in upper carrier 204. A pair of guide pins 230 are attached to fixture 201 and slide within receiving holes 232 to ensure alignment in a perpendicular plane. Carrier 204 can be moved on the horizontal plane and is supported on bearings 234 that move in tracks 235. Changes in positioning can be accomplished with motor 236 and pulley 237. When fixture 201 is raised or lowered, the beam of conical radiant energy emitted by lamp 205 will be narrowed or widened to accommodate various thicknesses of plastic sheets.

A longitudinally extending resistance heating element 215 is disposed beneath the table 203 at a distance sufficient for it to provide a wide band of heat on the lower side of plastic sheet 202. The width of the wide band of heat can be adjusted by shuttling the resistance heater 215 along a plane parallel to the sheet 202 thereby forming a softened band of the desired width, the length of travel of the heater 15 determining the width of the softened band. The heater 215 is shuttled on a lower carrier 31 that travels on roller 232 in tack 233. Motor 236 can also be used to move lower carrier 231 by means of pulley 240. Heater 215 can be adjusted on the vertical plane by means of screw and handle 241. Timing of the heaters 205 and 215 is controlled by control box 242.

After the plastic sheet 202 has been softened, it is moved from between braces 243 and 244, which hold it in place during bending, to one of the conventional bending brakes 244a or 244b.

In a specific example, a one quarter inch sheet of acrylic plastic was disposed on a table. A one-inch wide flat strip resistance heater was disposed beneath the sheet and a quartz-incandescent lamp housed in a reflector was disposed above it. The quartz lamp was arranged such that it could form a one-half inch band of softened plastic in the sheet. The flat heater, continuously on, heats 40-60% (preferably 50%) of the thickness of the sheet to soften. The surface temperature of the lower heater was 450 degrees F, but the temperature of the softened band of plastic on the sheet was only about 350 degrees F at a mid point of the band with a non-linear gradient down to about 300F about two inches from said mid-point on either side, providing spreading waves of heat in the sheet which may be likened to ripples spreading out from a pebble thrown into a pond. The temperatures therein are in the softening point range of the plastic. Following the softening of 50% of the thickness of the bottom side of the sheet, the quartz heater was turned on and the infra-red light was focused on the sheet to form a narrow band of softened plastic. The surface temperature of the narrow band was about 700-900 degrees F about two times the plastic's melting point but it was quickly done so as to avoid burning or melting through. The plastic sheet quickly softened throughout its thickness and it was then moved to the bending brake where it was bent into a ninety degree angle. Upon cooling, a ninety degree bend was formed on the sheet. Neither stress lines nor thinning were noticed.

It will now be apparent to those skilled in the art that other embodiments, improvements, details, and uses can be made consistent with the letter and spirit of the foregoing disclosure and within the scope of this patent, which is limited only by the following claims, construed in accordance with the patent law, including the doctrine of equivalents.

## Claims

1. A method of bending thick sheets, 3/16 inch and larger, of plastic materials with resultant bends which are substantially stress free and of substantially the same structural and visual properties as adjacent unbent portions comprising the steps of:
(a) arranging such sheet substantially horizontally;
(b) heating a relatively wide region along the sheet bottom with heat application which effects a non-linear gradient spreading of the heat externally applied or internally generated therein to soften 40-60% if the sheet thickness upwards of said bottom surface to plasticity;
(c) the heating an overlying top surface region of the sheet with intense heat limited to a narrower zone aligned with a critical part of the lower heated zone while maintaining the lower heat until the upper heated zone melts in part;
(d) then bending the sheet.

2. A bent, rigid plastic sheet as produced by the process of claim 1.

3. An apparatus for bending a sheet of plastic, said apparatus comprising;
(a) means for receiving a sheet of plastics;
(b) first heating means for heating a band on one side of said sheet;
(c) second heating means for heating a band on the obverse side of said sheet;
(d) means disposed behind said second heating means and arranged to focus said second heating means such that the band of heat it radiates upon said plastics sheet is narrower than the band radiated by said first heating means;
(e) said first and said second heating means being disposed on substantially the same plane and at an angle to the plane of said receiving means.

4. The apparatus according to claim 3, further including means for adjusting the distance between said second heating means and receiving means whereby the width of its band radiated upon the sheet can be adjusted.

5. The apparatus according to claim 3, further including control means for adjusting the heating cycle of said second heating means relative to said first heating means.

6. Apparatus according to claim 3, further including means for bending said panel about an axis of rotation such that one side of said sheet rotates about said obverse side of said sheet.

7. A method of heating thick sheets of plastic, the steps which comprise:
(a) arranging a sheet of plastic between a pair of longitudinally extending heat sources;
(b) heating a wide band on one side of said sheet with a first heat source and then heating the obverse side of said sheet with a second heat source, the heat from said second heat source being focussed such that it heats a narrower band of plastic than heated by said first heat source;
(c) bending said sheet about an axis of rotation centered on said obverse side of said sheet so as to form the inner radius of the bend.

8. The method according to claim 7, wherein the first heat source heats part of the thickness of the sheet and said second heating source then heats the balance of the thickness of said sheet.

9. The method according to claim 7, wherein the wide band is at least twice as wide as said narrow band.

10. The method according to claim 7, wherein the width of said wide band is at least about four times the thickness of the sheet and the width of the narrow band is less than about twice the thickness of said sheet.

11. The method according to claim 7, wherein the heaters are arranged on one plane and said sheet is arranged on a plane substantially normal to said plane.

12. The method according to claim 7, wherein the plastic sheet is greater than one-eighth inch thick.

13. The method according to claim 7, wherein the heating cycle of said second heat source is shorter than the cycle of said first heat source.

14. The method according to claim 7, wherein the heating cycle of said second heat source commences after the commencement of the heating cycle of said first heat source.

15. The method according to claim 7, wherein said second heat source commences operation after about 40 to 60% of said sheet is heated by said first heat source.

FIG. 1

FIG. 2

FIG. 3a

FIG. 3b

FIG. 4a

PRIOR ART

FIG. 4b

FIG. 5a

PRIOR ART

FIG. 5b

FIG. 6

EP 0 365 054 A2